# EUROPEAN PATENT APPLICATION

(11) **EP 4 072 106 A1**
(43) Date of publication of application: **12.10.2022**
(21) Application number: 21207626.9
(22) Date of filing: 10.11.2021
(51) Int. Cl.: H04L 67/12, H04L 67/565, H04W 4/70

(54) **DYNAMIC ENVIRONMENT MONITORING**

(30) Priority: 09.04.2021 CN 202110381277
(71) Applicant: Vertiv Tech Co., Ltd., Guangdong 518055 (CN)
(72) Inventor: ZUO, Zhaogui, Guangdong, 518055 (CN); HU, Kaigeng, Guangdong, 518055 (CN); LIU, Guangcai, Guangdong, 518055 (CN)
(74) Representative: Harden, Henry Simon

(57) **Abstract**

The present invention provides a dynamic environment monitoring device and system and method, the device comprising: a data interface connected to a processing module and a dynamic environment data acquisition device, and configured to transmit dynamic environment monitoring data acquired by the dynamic environment data acquisition device to the processing module; the processing module respectively connected to the data interface and a transmission module, and configured to acquire the dynamic environment monitoring data transmitted by the data interface, filter the dynamic environment monitoring data and store the filtered dynamic environment monitoring data, and transmit the stored dynamic environment monitoring data to the transmission module; and the transmission module connected to the processing module and a cloud monitoring center and/or intelligent terminal, and configured to report the dynamic environment monitoring data transmitted by the processing module to the cloud monitoring center and/or intelligent terminal. The dynamic environment monitoring device provided by the present invention filters and stores the dynamic environment monitoring data, which lowers the requirements for network bandwidth in data transmission and reduces the pressure of performing data processing and storage by the cloud monitoring center.

## Description

### FIELD OF THE INVENTION

The present invention relates generally to the field of communication technology, in particular to a dynamic environment monitoring device and system and method.

### BACKGROUND

Dynamic environment monitoring refers to performing remote measurement, remote signaling, remote adjustment and remote control for various power devices such as a power cabinet, an Uninterruptible Power Supply (UPS), an air conditioner, a storage battery and the like, as well as various parameters of environments such as door magnetism, infrared, window breakage, water immersion, temperature and humidity, smoke sensing and the like, monitoring operating parameters thereof in real time, diagnosing and processing faults, recording and analyzing related data, and performing centralized monitoring and centralized maintenance for devices.

With the rapid development of communication industry, the construction of Internet Data Centers (IDCs) of various sizes is rapidly spreading, and nowadays the construction of 5G IDC data center has been started or preliminarily completed in industries such as banking, education, medical treatment and the like. In the prior art, the scheme of performing dynamic environment monitoring for the above-mentioned IDC data centers is to connect a plurality of dynamic environment acquisition devices to a bus, for connection with a cloud monitoring center through the bus, based on the architecture of Dynamic Environment Acquisition Device-Cloud Monitoring Center. Data of dynamic environment intelligent devices in the above-mentioned IDC data centers is acquired through the above-mentioned dynamic environment acquisition devices, and is subjected to processing such as protocol conversion and analysis and the like by the above-mentioned acquisition devices, and the processed dynamic environment monitoring data is transmitted to the cloud monitoring center through an optical port or electrical port, so that the above-mentioned cloud monitoring center performs processing on the above-mentioned dynamic environment monitoring data.

However, the above-mentioned cloud monitoring center needs to simultaneously receive massive data transmitted by dynamic environment acquisition devices in a plurality of IDC data centers, which has higher requirements for network bandwidth and may not ensure real-time data transmission; also, execution of processing on data is concentrated in the platform of the cloud monitoring center, which increases the processing burden of the server of the cloud monitoring center.

### SUMMARY OF THE INVENTION

The present invention provides a dynamic environment monitoring device and system and method, so as to solve the problem that a cloud monitoring center has higher requirements for network bandwidth, has higher pressure of performing data processing and storage and performs untimely data processing.

In a first aspect, the present invention provides a dynamic environment monitoring device, comprising:
a data interface connected to a processing module and a dynamic environment data acquisition device, and configured to transmit dynamic environment monitoring data acquired by the dynamic environment data acquisition device to the processing module;
the processing module respectively connected to the data interface and a transmission module, and configured to acquire the dynamic environment monitoring data transmitted by the data interface, filter the dynamic environment monitoring data and store the filtered dynamic environment monitoring data, and transmit the stored dynamic environment monitoring data to the transmission module; and
the transmission module connected to the processing module and a cloud monitoring center and/or intelligent terminal, and configured to report the dynamic environment monitoring data transmitted by the processing module to the cloud monitoring center and/or intelligent terminal.

Optionally, the dynamic environment monitoring device further comprises:
a control interface connected between a management device and the processing module,
wherein the processing module is further configured to:
transmit the stored dynamic environment monitoring data to the management device through the control interface, and receive a data management instruction forwarded by the management device through the control interface and manage the stored dynamic environment monitoring data according to the data management instruction.

Optionally, the processing module comprises:
a central processing unit respectively connected to the data interface and a switch module, and configured to acquire non-video type dynamic environment monitoring data transmitted by the data interface, and transmit the non-video type dynamic environment monitoring data to an industrial computer module through the switch module;
the switch module respectively connected to the central processing unit, the data interface and the industrial computer module, and configured to realize data transmission between the central processing unit and the industrial computer module, and acquire video type dynamic environment monitoring data transmitted by the data interface and transmit the video type dynamic environment monitoring data to the industrial computer module; and
the industrial computer module configured to filter the non-video type and/or video type dynamic environment monitoring data and store the filtered dynamic environment monitoring data,
wherein the central processing unit and/or industrial computer module is connected to the transmission module, and is further configured to transmit the dynamic environment monitoring data stored in the industrial computer module to the transmission module.

Optionally, the industrial computer module is further configured to:
transmit the stored dynamic environment monitoring data to the management device through the control interface, and receive a data management instruction forwarded by the management device through the control interface and manage the stored dynamic environment monitoring data according to the data management instruction.

Optionally, the industrial computer module comprises:
an industrial computer mainboard configured to: filter the non-video type and/or video type dynamic environment monitoring data through a memory, store the filtered dynamic environment monitoring data into a hard disk module, transmit the dynamic environment monitoring data stored in the hard disk module to the central processing unit and/or transmission module; transmit the stored dynamic environment monitoring data to the management device through the control interface, and receive the data management instruction forwarded by the management device through the control interface and manage the stored dynamic environment monitoring data according to the data management instruction;
a memory module configured to filter the non-video type and/or video type dynamic environment monitoring data under the control of the industrial computer mainboard; and
the hard disk module configured to store the filtered dynamic environment monitoring data.

Optionally, the transmission module comprises at least one of:
a 5G transmission module configured to report, through 5G transmission, the dynamic environment monitoring data transmitted by the processing module to the cloud monitoring center and/or intelligent terminal;
a Packet Transport Network (PTN) transmission module configured to report, through PTN transmission, the dynamic environment monitoring data transmitted by the processing module to the cloud monitoring center and/or intelligent terminal; and
an Internet Protocol (IP) transmission module configured to report, through IP transmission, the dynamic environment monitoring data transmitted by the processing module to the cloud monitoring center and/or intelligent terminal.

Optionally, the transmission module is further configured to acquire the dynamic environment monitoring data acquired by the dynamic environment data acquisition device through a wireless communication mode of Narrow Band Internet of Things (NB-IOT) or Zigbee or WIFI, and report the acquired dynamic environment monitoring data to the cloud monitoring center and/or intelligent terminal.

Optionally, the data interface comprises:
a non-network interface connected between a first dynamic environment data acquisition device and the processing module, and configured to transmit non-video type dynamic environment monitoring data acquired by the first dynamic environment data acquisition device to the processing module; and
a network interface connected between a second dynamic environment data acquisition device and the processing module, and configured to transmit video type dynamic environment monitoring data acquired by the second dynamic environment data acquisition device to the processing module.

Optionally, the first dynamic environment data acquisition device comprises an intelligent device and a non-intelligent device, and the non-network interface comprises:
an electrical signal acquisition interface connected to the non-intelligent device, comprising an analog signal acquisition interface and a switch signal acquisition interface;
a serial port acquisition interface connected to the intelligent device; and
an expansion interface connected to an expansion slot which uses a Universal Serial Bus (USB) communication protocol.

Optionally, the dynamic environment monitoring device further comprises:
at least one DC power supply module configured to convert an input voltage into DC power supply in a first preset range; or
at least one AC power supply module configured to convert an input voltage into AC power supply in a second preset range or high-voltage AC power supply in a third preset range,
wherein the at least one DC/AC power supply module comprises a working power supply and at least one standby power supply, the working power supply provides power when it is normal, and the standby power supply provides power when the working power supply is abnormal.

Optionally, the processing module is further configured to acquire, through the data interface/wireless communication mode, the dynamic environment monitoring data acquired by the dynamic environment data acquisition device connected to a pass-through device that is forwarded by the pass-through device.

In a second aspect, the present invention provides a dynamic environment monitoring system, comprising:
a dynamic environment data acquisition device configured to acquire dynamic environment monitoring data, and transmit the dynamic environment monitoring data to a dynamic environment monitoring device;
the dynamic environment monitoring device according to any of the first aspect as described above; and
a cloud monitoring center and/or intelligent terminal configured to: receive the dynamic environment monitoring data reported by the dynamic environment monitoring device, and perform dynamic environment monitoring based on the reported dynamic environment monitoring data.

In a third aspect, the present invention provides a dynamic environment monitoring method, comprising:
receiving, through a data interface, dynamic environment monitoring data acquired by a dynamic environment data acquisition device;
filtering the dynamic environment monitoring data and storing the filtered dynamic environment monitoring data; and
reporting the stored dynamic environment monitoring data to a cloud monitoring center and/or intelligent terminal through a transmission module.

Optionally, the method further comprises, after storing the filtered dynamic environment monitoring data:
transmitting the stored dynamic environment monitoring data to a management device through a control interface; and
receiving a data management instruction forwarded by the management device through the control interface, and managing the stored dynamic environment monitoring data according to the data management instruction.

Optionally, the receiving, through a data interface, dynamic environment monitoring data acquired by a dynamic environment data acquisition device comprises:
by a central processing unit, receiving non-video type dynamic environment monitoring data through the data interface, and transmitting the non-video type dynamic environment monitoring data to an industrial computer module through a switch module, and
by the switch module, receiving video type dynamic environment monitoring data through the data interface, and transmitting the video type dynamic environment monitoring data to the industrial computer module;
the filtering the dynamic environment monitoring data and storing the filtered dynamic environment monitoring data comprises:
by the industrial computer module, filtering the non-video type and/or video type dynamic environment monitoring data, and storing the filtered dynamic environment monitoring data; and
the reporting the stored dynamic environment monitoring data to a cloud monitoring center and/or intelligent terminal through a transmission module comprises:
by the central processing unit and/or industrial computer module, reporting the stored dynamic environment monitoring data to the cloud monitoring center and/or intelligent terminal through the transmission module.

Optionally, the method further comprises, after storing the filtered dynamic environment monitoring data by the industrial computer module:
by the industrial computer module, transmitting the stored dynamic environment monitoring data to the management device through the control interface; and
by the industrial computer module, receiving the data management instruction forwarded by the management device through the control interface, and managing the stored dynamic environment monitoring data according to the data management instruction.

Optionally, the data interface comprises a non-network interface and a network interface, and the receiving, through a data interface, dynamic environment monitoring data acquired by a dynamic environment data acquisition device comprises:
through the non-network interface, receiving non-video type dynamic environment monitoring data reported by a non-intelligent device;
through the data interface, sending a data acquiring instruction to an intelligent device, and receiving the dynamic environment monitoring data passively reported by the intelligent device in response to the data acquiring instruction; and
through the data interface, receiving the dynamic environment monitoring data actively reported by a designated intelligent device when a reporting condition is met, and sending confirmation information to the designated intelligent device.

Optionally, the receiving, through a data interface, dynamic environment monitoring data acquired by a dynamic environment data acquisition device comprises:
by a central processing unit, sending the data acquiring instruction to the intelligent device through the non-network interface/network interface, and receiving non-video type/video type dynamic environment monitoring data passively reported by the intelligent device through the non-network interface/network interface; and
by the central processing unit, receiving, through the non-network interface/network interface, the non-video type/video type dynamic environment monitoring data actively reported by the designated intelligent device when the reporting condition is met, and sending the confirmation information to the designated intelligent device.

Optionally, the receiving, through a data interface, dynamic environment monitoring data acquired by a dynamic environment data acquisition device further comprises:
by a central processing unit, sending the data acquiring instruction to a pass-through device through the non-network interface/wireless communication mode, and receiving the dynamic environment monitoring data passively reported by the intelligent device that is forwarded by an interface of the pass-through device; and
by the central processing unit, receiving, through the non-network interface/wireless communication mode, the dynamic environment monitoring data actively reported by the designated intelligent device when the reporting condition is met that is forwarded by the pass-through device, and sending the confirmation information to the designated intelligent device through the pass-through device.

Optionally, the method further comprises:
decrypting, through the pass-through device, encrypted data acquiring instruction/confirmation information sent by the central processing unit through the wireless communication mode; and
encrypting, through the pass-through device, the dynamic environment monitoring data passively reported by the intelligent device/actively reported by the designated intelligent device.

The dynamic environment monitoring device and system and method provided by the present invention has the following beneficial effects.

The dynamic environment monitoring device provided by the present invention realizes filtering and storage for the dynamic environment monitoring data. The task of processing and storing part or all of the dynamic environment monitoring data is executed by the dynamic environment monitoring device, which reduces the pressure of performing data processing and storage by the cloud monitoring center, improves the processing efficiency of the dynamic environment monitoring data, reduces data that needs to be transmitted to the cloud monitoring center, and lowers the requirements for network bandwidth in data transmission.

### BRIEF DESCRIPTION OF THE DRAWINGS

Figure 1 is a schematic diagram of a dynamic environment monitoring system provided by an embodiment of the present invention;
Figure 2 is a schematic diagram of a dynamic environment monitoring device provided by an embodiment of the present invention;
Figure 3 is a schematic diagram of the structure of a dynamic environment monitoring device provided by an embodiment of the present invention;
Figure 4 is a schematic diagram of the specific implementation structure of a dynamic environment monitoring device provided by an embodiment of the present invention;
Figure 5 is a schematic diagram of the architecture of a dynamic environment monitoring system provided by an embodiment of the present invention;
Figure 6 is a flowchart of a dynamic environment monitoring method provided by an embodiment of the present invention;
Figure 7 is a signaling flowchart of a passive query provided by an embodiment of the present invention;
Figure 8 is a signaling flowchart of an active reporting provided by an embodiment of the present invention;
Figure 9 is a signaling flowchart of a passive query of a pass-through device provided by an embodiment of the present invention; and
Figure 10 is a signaling flowchart of an active reporting of a pass-through device provided by an embodiment of the present invention.

### DETAILED DESCRIPTION OF THE INVENTION

The technical solutions in embodiments of the present application will be clearly and completely described below in combination with the accompanying drawings in the embodiments of the present application. Obviously, the embodiments as described are only part of the embodiments, not all of the embodiments, of the present application. Based on the embodiments in the present application, all other embodiments obtained by those ordinarily skilled in the art without creative work fall within the scope of protection of the present application.

It should be noted that, the terms "first", "second" and the like in the description and the claims and the above-mentioned drawings of the present disclosure are used to distinguish similar objects, and not necessarily used to describe a specific order or a temporal sequence. It should be understood that the terms used in this way may be interchanged where appropriate so that the embodiments of the present disclosure described herein may be implemented in an order other than those illustrated or described herein.

The implementation modes described in the following exemplary embodiments do not represent all implementation modes consistent with the present disclosure. Rather, they are only examples of devices and methods which are consistent with some aspects of the present disclosure as described in detail in the appended claims. Based on the embodiments in the present application, all other embodiments obtained by those ordinarily skilled in the art without creative work fall within the scope of protection of the present application.

In the description of the embodiments of the present application, unless otherwise indicated, "/" means or, for example, A/B may mean A or B; the "and/or" in the text is only an association relationship describing associated objects, and means that there may be three relationships, for example, A and/or B may mean the following three cases: there is A alone, there is A and B at the same time, and there is B alone. In addition, in the description of the embodiments of the present application, "a plurality of" refers to two or more than two, and other quantifiers are similar thereto. It should be understood that, the preferred embodiments described here are only used to illustrate and explain the present application, but not to limit the present application, and the embodiments of the present application and the features in the embodiments may be combined with each other in the case of no conflict.

Hereinafter, some terms in the embodiments of the present invention will be explained, so as to facilitate the understanding of those skilled in the art.
(1) The term "5th generation mobile networks/5th generation wireless systems/5th-Generation, 5G" in the embodiments of the present invention is the latest generation of cellular mobile communication technology, with the performance characteristics of having a high data rate, reducing a delay, saving energy, reducing costs, increasing system capacity and large-scale device connection.
(2) The term "Internet Protocol (IP)" in the embodiments of the present invention provides a connectionless, unreliable, and best-effort data packet transmission service for a host. IP improves network scalability: solves Internet problems, realizes interconnection and intercommunication of large-scale and heterogeneous networks; segments a coupling relationship between a top-level network application and a bottom-level network technology, so as to facilitate the independent development of the two.
(3) The term "Packet Transport Network (PTN)" in the embodiments of the present invention refers to an optical transport network architecture and specific technology: a level is set between an IP service and an underlying optical transmission medium, which is designed directed to the burst of packet service traffic and the requirements of statistical multiplexing transmission, takes packet services as a core and supports multi-service provision, has a lower overall use cost, and meanwhile has the traditional advantages of optical transmission, including high availability and reliability, efficient bandwidth management mechanism and traffic engineering, convenient network management, scalability, higher security, etc.
(4) The term "Universal Serial Bus (USB)" in the embodiments of the present invention is an external bus standard used to standardize the connection and communication between a computer and an external device.
(5) The term "Recommend Standard (RS) 232/485/422" in the embodiments of the present invention is a commonly used serial communication interface standard, which is defined by the Telecommunications Industry Association and the Electronics Industry Alliance.
(6) The term "Power Over Ethernet (POE)" in the embodiments of the present invention is the latest standard specification that uses the existing standard Ethernet transmission cable to transmit data and electric power at the same time, which maintains the compatibility with the existing Ethernet system and users and, without any change to the existing Ethernet wiring infrastructure, may also provide the technology of DC power supply for a terminal while transmitting data signals for the above-mentioned terminal.
(7) The term "Registered Jack (RJ) 45" in the embodiments of the present invention is an information socket in a wiring system, i.e., a communication lead-out end, which is one of connectors, the connector consists of a plug (joint, crystal head) and a socket (module), and the plug has 8 grooves and 8 contacts.

In view of the above-mentioned problem that the cloud monitoring center has higher requirements for network bandwidth, has higher pressure of performing data processing and storage and performs untimely data processing, the present application proposes a dynamic environment monitoring device and system and method.

The dynamic environment monitoring device and system and method in the embodiments of the present application will be described below in detail in combination with the accompanying drawings.

### Embodiment 1

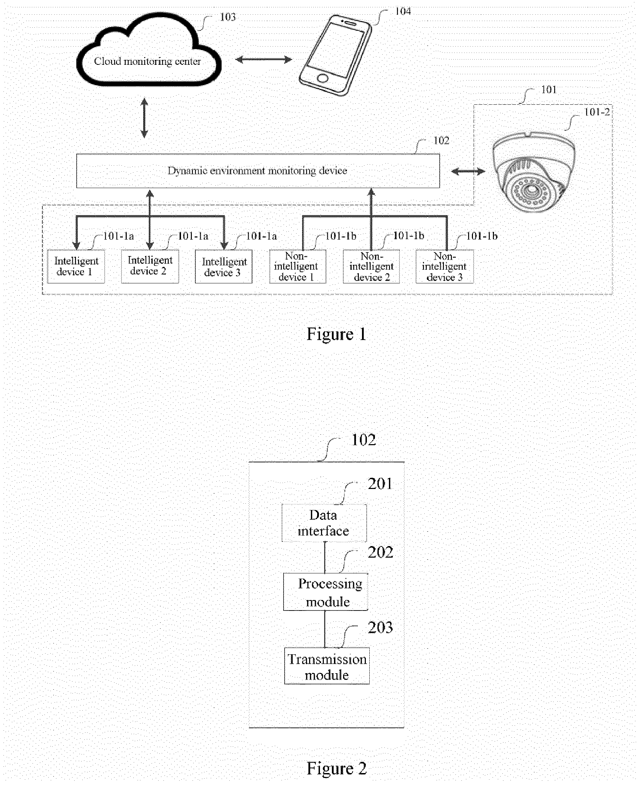

As shown in Figure 1, an embodiment of the present invention provides a schematic diagram of a dynamic environment monitoring system comprising: a dynamic environment data acquisition device 101, a dynamic environment monitoring device 102 and a monitoring center 103 and/or intelligent terminal 104.

The dynamic environment data acquisition device 101 is configured to acquire dynamic environment monitoring data, and transmit the dynamic environment monitoring data to a dynamic environment monitoring device.

As an optional implementation mode, the above-mentioned dynamic environment data acquisition device comprises a first dynamic environment data acquisition device 101-1 that acquires non-video type dynamic environment monitoring data, and a second dynamic environment data acquisition device 101-2 that acquires video type dynamic environment monitoring data.

It should be noted that, the above-mentioned first dynamic environment data acquisition device comprises an intelligent device 101-1a and a non-intelligent device 101-lb, and the above-mentioned second dynamic environment data acquisition device is an intelligent device.

The above-mentioned intelligent device may realize two-way communication with the dynamic environment monitoring device, and the above-mentioned non-intelligent device may realize data reporting to the dynamic environment monitoring device.

A device that supports a serial port communication or USB communication function is an intelligent device, and a device that does not support serial port communication and USB communication functions is a non-intelligent device.

According to the types of the dynamic environment monitoring data acquired by the above-mentioned dynamic environment data acquisition device, the above-mentioned dynamic environment data acquisition device includes, but is not limited to: (1) a switch signal acquisition device, for example, a dry contact type sensor such as a smoke sensing, door magnetism, water immersion, vibration, infrared and the like; (2) an analog signal acquisition device, for example, a temperature and humidity sensor and a detection device that detects an analog quantity such as a battery voltage and the like; (3) a remote control device, for example, a remote control machine of the ON/OFF of an oil machine; (4) a power device with an intelligent interface (RS232/RS485/RS422), for example, an air conditioner, a power supply and the like; and (5) a video acquisition device, for example, a video image monitoring device and the like.

As an optional implementation mode, the above-mentioned switch signal acquisition device and analog signal acquisition device adopt an electrical signal acquisition mode; the above-mentioned remote control device and power device with an intelligent interface (RS232/RS485/RS422) adopt a serial port communication mode; for an intelligent device with a large amount of data, such as the above-mentioned video acquisition device and the like, a network interface is used to perform communication.

In the above-mentioned serial port communication mode, a data transmission rate of a single device is less than 19200 bit rate.

It should be noted that, the above-mentioned dynamic environment data acquisition device is only an example of the dynamic environment data acquisition device of the embodiment of the present invention, any device with a dynamic environment data acquisition function may be applied to the above-mentioned dynamic environment data acquisition device, the embodiment of the present invention does not make a limitation to this, and the embodiment of the present invention does not make a limitation to the specific implementation form of the above-mentioned dynamic environment data acquisition device, either.

As an optional implementation mode, data interaction is performed between the above-mentioned dynamic environment data acquisition device and the dynamic environment monitoring device through a pass-through device.

The dynamic environment monitoring device 102 is configured to: acquire the dynamic environment monitoring data acquired by the dynamic environment data acquisition device; filter the dynamic environment monitoring data, and store the filtered dynamic environment monitoring data; and report the stored dynamic environment monitoring data to the cloud monitoring center and/or intelligent terminal.

The above-mentioned dynamic environment monitoring device is applied to the field of dynamic environment monitoring, and is based on a master-slave monitoring architecture, wherein a slave device is the above-mentioned dynamic environment data acquisition device, and a master device is the above-mentioned dynamic environment monitoring device.

The above-mentioned dynamic environment monitoring device has the functions of filtering and local storage of dynamic environment monitoring data, stores dynamic environment monitoring data in a large-capacity hard disk, constructs preprocessing technology based on dynamic environment monitoring data of a monitored data center site, removes redundant information of the dynamic environment monitoring data, and causes part or entirety of dynamic environment monitoring data analysis to be migrated to the above-mentioned data center site, thereby reducing the computation, storage and network bandwidth requirements for a cloud monitoring center, and improving the efficiency of processing on dynamic environment monitoring data; and realizes elastic storage for dynamic environment monitoring data, and adjusts the stored dynamic environment monitoring data in real time according to a decision-making function of behavior characteristics, thereby reducing storage of invalid dynamic environment monitoring data, reducing storage space, and improving a utilization rate of the storage space.

The monitoring center 103 and/or intelligent terminal 104 is configured to receive dynamic environment monitoring data reported by the dynamic environment monitoring device, and perform dynamic environment monitoring based on the reported dynamic environment monitoring data.

The above-mentioned dynamic environment monitoring device realizes two-way communication with the above-mentioned cloud monitoring center and/or intelligent terminal, with communication modes including, but not limited to, wireless transmission modes such as 5Q 4Q 3G and the like, and wired transmission modes such as optical ports or electrical ports or the like.

The above-mentioned cloud monitoring center and/or intelligent terminal, depending on specific implementation situations, call valid dynamic environment monitoring data stored by the above-mentioned dynamic environment monitoring device, and sends information of adding or deleting related data to the above-mentioned dynamic environment monitoring device, so that the above-mentioned dynamic environment monitoring device manages the stored dynamic environment monitoring data.

It should be noted that, the above-mentioned dynamic environment monitoring system may add or delete some entities depending on specific implementation situations. For example, the above-mentioned cloud monitoring center and/or intelligent terminal may communicate with a plurality of dynamic environment monitoring devices at the same time, the above-mentioned dynamic environment monitoring device may perform data interaction with a plurality of dynamic environment monitoring data acquisition devices at the same time, and the embodiment of the present invention does not make a limitation to this.

As shown in Figure 2, an embodiment of the present invention provides a schematic diagram of a dynamic environment monitoring device 102, comprising a data interface 201, a processing module 202, and a transmission module 203.

The data interface 201 is connected to a processing module and a dynamic environment data acquisition device, and configured to transmit dynamic environment monitoring data acquired by the dynamic environment data acquisition device to the processing module.

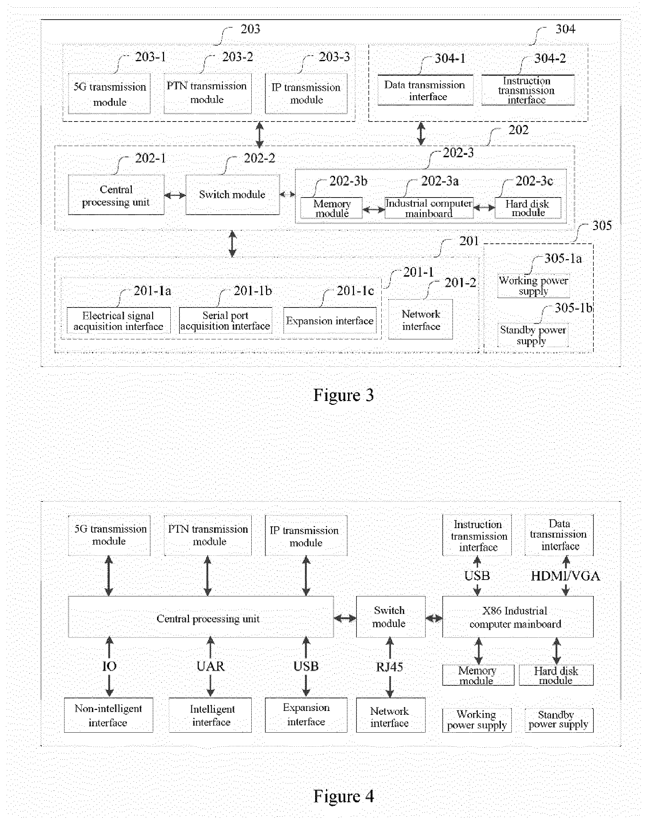

As shown in Figure 3, an embodiment of the present invention provides a schematic diagram of the structure of a dynamic environment monitoring device, comprising a data interface 201, a processing module 202, and a transmission module 203.

As an optional implementation mode, the above-mentioned dynamic environment monitoring device further comprises:
a control interface 304 connected between a management device and the processing module.

The above-mentioned control interface comprises: a data transmission interface 304-1 and an instruction transmission interface 304-2.

The above-mentioned data transmission interface may be a video graphics array VGA/high-definition multimedia HDMI interface, for connecting a display device, for example, a display or a touch screen.

The above-mentioned instruction transmission interface may be a USB interface for connecting a control device, for example, a keyboard and a mouse.

The above-mentioned management device comprises the above-mentioned display device and the above-mentioned control device. The management device used in the embodiment of the present invention involves the same concept as the above-mentioned management device, and will not be repeatedly described hereafter.

The processing module is further configured to:
transmit the stored dynamic environment monitoring data to the management device through the control interface; and receive a data management instruction forwarded by the management device through the control interface, and manage the stored dynamic environment monitoring data according to the data management instruction.

Through the above-mentioned structure, the above-mentioned dynamic environment monitoring device realizes a local data service function including local data browsing and management.

As an optional implementation mode, the above-mentioned data interface comprises: a non-network interface 201-1 and a network interface 201-2.

The non-network interface 201-1 is connected between a first dynamic environment data acquisition device and the processing module, and is configured to transmit non-video type dynamic environment monitoring data acquired by the first dynamic environment data acquisition device to the processing module.

The first dynamic environment data acquisition device comprises an intelligent device and a non-intelligent device, wherein a device with a serial port communication function is an intelligent device, and a device without a serial port communication function is a non-intelligent device.

As an optional implementation mode, the non-network interface 201-1 comprises:
an electrical signal acquisition interface 201-1a connected to the non-intelligent device, and comprising an analog signal acquisition interface and a switch signal acquisition interface;
a serial port acquisition interface 201-1b connected to the intelligent device; and
an expansion interface 201-1c connected to an expansion slot which uses a universal serial bus USB communication protocol.

In specific implementation, according to structures of dynamic environment data acquisition devices, different dynamic environment data acquisition devices are connected to different interfaces, for example, a dynamic environment data acquisition device with a serial port is connected to the above-mentioned serial port acquisition interface.

It should be noted that, the above-mentioned dynamic environment monitoring device has the scalability of data interfaces, and in specific implementation, a needed data interface may be initiatively expanded according to a monitored object.

Expandable interfaces for the expansion slot of the above-mentioned dynamic environment monitoring device include, but are not limited to, analog signal acquisition interfaces, smoke sensing sensor interfaces, water immersion sensor interfaces, USB interfaces, Secure Digital (SD) cards, network interfaces, and intelligent interfaces such as RS232/RS422 /RS485 and the like.

In expanding data interfaces, a prepared expansion board is directly inserted into the expansion slot corresponding to the above-mentioned dynamic environment monitoring device.

A communication mode between the above-mentioned dynamic environment monitoring device and the above-mentioned expansion slot is USB communication.

An expansion mode of the expansion slot of the above-mentioned dynamic environment monitoring device may be any mode capable of realizing two-way communication, including but not limited to USB, Serial Peripheral Interface (SPI), and Inter-Integrated circuit (I2C) bus.

The network interface 201-2 is connected between a second dynamic environment data acquisition device and the processing module, and is configured to transmit video type dynamic environment monitoring data acquired by the second dynamic environment data acquisition device to the processing module.

The above-mentioned second dynamic environment data acquisition device is an intelligent device that acquires video type dynamic environment monitoring data.

As an optional implementation mode, the above-mentioned network interface has a POE function.

The above-mentioned network interface may support any external power supply mode that may be implemented, including but not limited to providing a 15.4W power supply conforming to the Institute of Electrical and Electronics Engineers (IEEE) 802.3af standard, or a 30W power supply conforming to 802.3at standard, for intelligent devices supporting the POE function, and the embodiment of the present invention does not make any limitation to its power supply standard and specific voltage value.

As an optional implementation mode, the above-mentioned data interface is an RJ45 interface, which realizes convenient, fast, simple and reliable connection.

The processing module 202 is respectively connected to the data interface and the transmission module, and configured to: acquire the dynamic environment monitoring data transmitted by the data interface; filter the dynamic environment monitoring data, and store the filtered dynamic environment monitoring data; and transmit the stored dynamic environment monitoring data to the transmission module.

As an optional implementation mode, the processing module is further configured to acquire, through the data interface/wireless communication mode, dynamic environment monitoring data acquired by a dynamic environment data acquisition device connected to a pass-through device that is forwarded by the pass-through device.

As an optional implementation mode, the above-mentioned pass-through device is connected to the processing module through the above-mentioned serial port acquisition interface.

As an optional implementation mode, the above-mentioned pass-through device performs data communication with the processing module through a wireless communication mode.

As shown in Figure 3, as an optional implementation mode, the processing module 202 comprises a central processing unit 202-1, a switch module 202-2 and an industrial computer module 202-3.

The central processing unit 202-1 is respectively connected to the data interface and a switch module, and is configured to: acquire non-video type dynamic environment monitoring data transmitted by the data interface; and transmit the non-video type dynamic environment monitoring data to an industrial computer module through the switch module.

As an optional implementation mode, the above-mentioned central processing unit is further configured to filter non-video type dynamic environment monitoring data, and transmit the filtered non-video type dynamic environment monitoring data to the industrial computer module through the above-mentioned switch module.

The switch module 202-2 is respectively connected to the central processing unit, the data interface and the industrial computer module, and is configured to: realize data transmission between the central processing unit and the industrial computer module; and acquire video type dynamic environment monitoring data transmitted by the data interface, and transmit the video type dynamic environment monitoring data to the industrial computer module.

It should be noted that, the communication mode between the above-mentioned central processing unit and industrial computer module is any mode capable of realizing two-way communication therebetween, for example, using USB, SPI, I2C modules, which is not limited to the realization through the above-mentioned switch module.

The industrial computer module 202-3 is configured to filter the non-video type and/or video type dynamic environment monitoring data, and store the filtered dynamic environment monitoring data.

The central processing unit 202-1 and/or industrial computer module 202-3 is connected to the transmission module, and is further configured to transmit the dynamic environment monitoring data stored by the industrial computer module to the transmission module.

The above-mentioned transmission module may be connected to the above-mentioned central processing unit or industrial computer module, and may also be connected to the above-mentioned central processing unit or industrial computer module at the same time, for example, one transmission module is connected to the above-mentioned central processing unit or industrial computer module at the same time, or two transmission modules are respectively connected to the above-mentioned central processing unit or industrial computer module.

It should be noted that, a higher central processing unit (CPU) performance is required for the removal of redundant information of video type dynamic environment monitoring data, and the above-mentioned dynamic environment monitoring device realizes filtering for video type dynamic environment monitoring data through the industrial computer module, and realizes filtering for non-video type dynamic environment monitoring data through the industrial computer module and/or central processing unit.

As an optional implementation mode, the industrial computer module is further configured to:
transmit the stored dynamic environment monitoring data to the management device through the control interface; and receive a data management instruction forwarded by the management device through the control interface, and manage the stored dynamic environment monitoring data according to the data management instruction.

The above-mentioned data management instruction may be an instruction such as data addition, deletion, modification, and the like.

The above-mentioned industrial computer module is equivalent to integrating a small industrial computer into the above-mentioned dynamic environment monitoring device: the above-mentioned industrial computer module is directly or indirectly connected to a network interface configured to acquire video type dynamic environment monitoring data and a control interface, and may load and run monitoring platform software, which may realize the functions of local data browsing and management.

As an optional implementation mode, the industrial computer module 202-3 comprises: an industrial computer mainboard 202-3a, a memory module 202-3b and a hard disk module 202-3c.

The industrial computer mainboard 202-3a is configured to: filter the non-video type and/or video type dynamic environment monitoring data through a memory; store the filtered dynamic environment monitoring data to a hard disk module; transmit the dynamic environment monitoring data stored in the hard disk module to the central processing unit and/or transmission module; transmit the stored dynamic environment monitoring data to the management device through the control interface; and receive a data management instruction forwarded by the management device through the control interface, and manage the stored dynamic environment monitoring data according to the data management instruction.

The form of the above-mentioned industrial computer mainboard may be a high-performance CPU that realizes the filtering of the dynamic environment monitoring data, for example, Intel Celeron CPU, and the present invention does not limit the specific form of the above-mentioned industrial computer mainboard.

The memory module 202-3b is configured to filter the non-video type and/or video type dynamic environment monitoring data under the control of the industrial computer mainboard.

The form of the above-mentioned memory module may be any memory form that realizes the filtering of the non-video type and/or video type dynamic environment monitoring data, for example, a 8G DDR3 memory or a hard disk with larger capacity, and the present invention does not limit the specific form of the above-mentioned memory module.

The hard disk module 202-3c is configured to store the filtered dynamic environment monitoring data.

The form of the above-mentioned hard disk module may be any hard disk form that realizes storage of the filtered dynamic environment monitoring data, for example, a hard disk with a size of 500G or a hard disk with larger capacity, and the present invention does not limit the specific form of the above-mentioned hard disk module.

The acquired dynamic environment monitoring data is filtered by the above-mentioned industrial computer module of the above-mentioned processing module, only needed dynamic environment monitoring data is stored, and then the stored dynamic environment monitoring data is transmitted, which may lower the requirements for network transmission bandwidth, as well as the pressure of storing dynamic environment monitoring data by the cloud monitoring center.

As an optional implementation mode, the acquired dynamic environment monitoring data is stored, and the stored dynamic environment monitoring data is filtered to retain dynamic environment monitoring data that meets filtering conditions, and the retained dynamic environment monitoring data is reported to a cloud monitoring center and/or intelligent terminal.

According to the function allocation of the above-mentioned central processing unit and the above-mentioned industrial computer module, and the connection relationship between the above-mentioned central processing unit and the above-mentioned industrial computer module as well as the above-mentioned transmission module, the above-mentioned dynamic environment monitoring device has the following implementation modes for the processing flow of the acquired dynamic environment monitoring data.

Implementation Mode 1: the above-mentioned central processing unit processes non-video type dynamic environment monitoring data, the above-mentioned industrial computer module processes video type dynamic environment monitoring data, and the above-mentioned central processing unit reports the processed data.

The above-mentioned central processing unit acquires non-video type dynamic environment monitoring data transmitted by the above-mentioned data interface; and filters the above-mentioned non-video type dynamic environment monitoring data, and transmits the filtered non-video type dynamic environment monitoring data to the industrial computer module through the above-mentioned switch module. The above-mentioned industrial computer module stores the above-mentioned filtered non-video type dynamic environment monitoring data.

The above-mentioned industrial computer module acquires video type dynamic environment monitoring data transmitted by the above-mentioned switch module; and filters the above-mentioned video type dynamic environment monitoring data, and stores the filtered video type dynamic environment monitoring data.

The above-mentioned industrial computer module transmits the above-mentioned stored video type and non-video type dynamic environment monitoring data to the above-mentioned central processing unit through the above-mentioned switch module, and the above-mentioned central processing unit transmits the above-mentioned transmitted dynamic environment monitoring data to the above-mentioned transmission module connected therewith, to perform data reporting.

Implementation Mode 2: the above-mentioned central processing unit processes non-video type dynamic environment monitoring data, the above-mentioned industrial computer module processes video type dynamic environment monitoring data, and the above-mentioned industrial computer module reports the processed data.

The above-mentioned central processing unit acquires non-video type dynamic environment monitoring data transmitted by the above-mentioned data interface; and filters the above-mentioned non-video type dynamic environment monitoring data, and transmits the filtered non-video type dynamic environment monitoring data to the industrial computer module through the above-mentioned switch module. The above-mentioned industrial computer module stores the above-mentioned filtered non-video type dynamic environment monitoring data.

The above-mentioned industrial computer module acquires video type dynamic environment monitoring data transmitted by the above-mentioned switch module; and filters the above-mentioned video type dynamic environment monitoring data, and stores the filtered video type dynamic environment monitoring data.

The above-mentioned industrial computer module transmits the above-mentioned stored video type and non-video type dynamic environment monitoring data to the above-mentioned transmission module connected therewith, to perform data reporting.

Implementation Mode 3: the above-mentioned central processing unit processes non-video type dynamic environment monitoring data, the above-mentioned industrial computer module processes video type dynamic environment monitoring data, and the above-mentioned central processing unit and the above-mentioned industrial computer module report the processed data.

The above-mentioned central processing unit acquires non-video type dynamic environment monitoring data transmitted by the above-mentioned data interface; and filters the above-mentioned non-video type dynamic environment monitoring data, and transmits the filtered non-video type dynamic environment monitoring data to the industrial computer module through the above-mentioned switch module. The above-mentioned industrial computer module stores the above-mentioned filtered non-video type dynamic environment monitoring data.

The above-mentioned industrial computer module acquires video type dynamic environment monitoring data transmitted by the above-mentioned switch module; and filters the above-mentioned video type dynamic environment monitoring data, and stores the filtered video type dynamic environment monitoring data.

The above-mentioned industrial computer module transmits the above-mentioned stored non-video type dynamic environment monitoring data to the above-mentioned transmission module connected therewith, to perform data reporting.

The above-mentioned industrial computer module transmits the above-mentioned stored video type dynamic environment monitoring data to the central processing unit through the above-mentioned switch module, and the above-mentioned central processing unit transmits the above-mentioned transmitted dynamic environment monitoring data to the above-mentioned transmission module connected therewith, to perform data reporting.

Implementation Mode 4: the above-mentioned industrial computer module processes all dynamic environment monitoring data, and the above-mentioned central processing unit reports the processed data.

The above-mentioned central processing unit acquires non-video type dynamic environment monitoring data transmitted by the above-mentioned data interface, and transmits the above-mentioned non-video type dynamic environment monitoring data to the above-mentioned industrial computer module through the above-mentioned switch module. The above-mentioned industrial computer module acquires non-video type dynamic environment monitoring data transmitted by the above-mentioned switch module. The above-mentioned industrial computer module filters the above-mentioned non-video type dynamic environment monitoring data, and stores the filtered video type dynamic environment monitoring data.

The above-mentioned industrial computer module acquires video type dynamic environment monitoring data transmitted by the above-mentioned switch module. The above-mentioned industrial computer module filters the above-mentioned video type dynamic environment monitoring data, and stores the filtered video type dynamic environment monitoring data.

The above-mentioned industrial computer module transmits the above-mentioned stored non-video and video type dynamic environment monitoring data to the above-mentioned central processing unit through the above-mentioned switch module, and the above-mentioned central processing unit transmits the above-mentioned transmitted dynamic environment monitoring data to the above-mentioned transmission module connected therewith, to perform data reporting.

Implementation Mode 5: the above-mentioned industrial computer module processes all dynamic environment monitoring data, and reports the processed data.

The above-mentioned central processing unit acquires non-video type dynamic environment monitoring data transmitted by the above-mentioned data interface, and transmits the above-mentioned non-video type dynamic environment monitoring data to the above-mentioned industrial computer module through the above-mentioned switch module. The above-mentioned industrial computer module acquires non-video type dynamic environment monitoring data transmitted by the above-mentioned switch module. The above-mentioned industrial computer module filters the above-mentioned non-video type dynamic environment monitoring data, and stores the filtered video type dynamic environment monitoring data.

The above-mentioned industrial computer module acquires video type dynamic environment monitoring data transmitted by the above-mentioned switch module. The above-mentioned industrial computer module filters the above-mentioned video type dynamic environment monitoring data, and stores the filtered video type dynamic environment monitoring data.

The above-mentioned industrial computer module transmits the above-mentioned stored non-video and video type dynamic environment monitoring data to the above-mentioned transmission module connected therewith, to perform data reporting.

Implementation Mode 6: the above-mentioned industrial computer module processes all dynamic environment monitoring data, and the above-mentioned central processing unit and the above-mentioned industrial computer module report the processed data.

The above-mentioned central processing unit acquires non-video type dynamic environment monitoring data transmitted by the above-mentioned data interface, and transmits the above-mentioned non-video type dynamic environment monitoring data to the industrial computer module through the above-mentioned switch module. The above-mentioned industrial computer module acquires non-video type dynamic environment monitoring data transmitted by the above-mentioned switch module. The above-mentioned industrial computer module filters the above-mentioned non-video type dynamic environment monitoring data, and stores the filtered video type dynamic environment monitoring data.

The above-mentioned industrial computer module acquires video type dynamic environment monitoring data transmitted by the above-mentioned switch module. The above-mentioned industrial computer module filters the above-mentioned video type dynamic environment monitoring data, and stores the filtered video type dynamic environment monitoring data.

The above-mentioned industrial computer module transmits the above-mentioned stored non-video type dynamic environment monitoring data to the above-mentioned central processing unit through the above-mentioned switch module, and the above-mentioned central processing unit transmits the above-mentioned transmitted dynamic environment monitoring data to the above-mentioned transmission module connected therewith, to perform data reporting.

The above-mentioned industrial computer module transmits the above-mentioned stored video type dynamic environment monitoring data to the above-mentioned transmission module connected therewith, to perform data reporting.

It should be noted that, on the basis of the above-mentioned Implementation Mode 1 to the above-mentioned Implementation Mode 6, flexible modifications may be carried out for the above-mentioned implementation modes, and they all fall within the scope of protection of the embodiments of the present invention. For example, the above-mentioned central processing unit initiatively stores the filtered non-video type dynamic environment monitoring data, or directly reports the above-mentioned filtered non-video type dynamic environment monitoring data without storing them; when both the above-mentioned central processing unit and industrial computer module are connected to the transmission module, it is possible to randomly select to perform data reporting through the transmission module connected to the above-mentioned central processing unit, or the transmission module connected to the above-mentioned industrial computer module.

The transmission module 203 is configured to connect the processing module and a cloud monitoring center and/or intelligent terminal, and report the dynamic environment monitoring data transmitted by the processing module to the cloud monitoring center and/or intelligent terminal.

As an optional implementation mode, the transmission module is further configured to acquire the dynamic environment monitoring data acquired by the dynamic environment data acquisition device through a wireless communication mode of Narrow Band Internet of Things (NB-IOT) or Zigbee or WIFI, and report the acquired dynamic environment monitoring data to the cloud monitoring center and/or intelligent terminal.

It should be noted that, the wireless communication mode between the above-mentioned transmission module and the above-mentioned dynamic environment data acquisition device may be any mode, and is not limited to the above-mentioned NB-IOT or Zigbee or WIFI mode.

In the above-mentioned Figure 3, as an optional implementation mode, the transmission module comprises at least one of the following:
a 5G transmission module 203-1 configured to report, through 5G transmission, the dynamic environment monitoring data transmitted by the processing module to the cloud monitoring center and/or intelligent terminal;
a Packet Transport Network (PTN) transmission module 203-2 configured to report, through PTN transmission, the dynamic environment monitoring data transmitted by the processing module to the cloud monitoring center and/or intelligent terminal; and
an Internet Protocol (IP) transmission module 203-3 configured to report, through IP transmission, the dynamic environment monitoring data transmitted by the processing module to the cloud monitoring center and/or intelligent terminal.

The above-mentioned transmission module comprises any one or more of the above-mentioned 5G/PTN/IP transmission modules.

The above-mentioned 5G transmission module may be directly plugged into an expansion slot of the above-mentioned dynamic environment monitoring device or a slot of the above-mentioned industrial computer mainboard.

As an optional implementation mode, the above-mentioned dynamic environment monitoring device further comprises a power supply module 305:
at least one DC power supply module configured to convert an input voltage into DC power supply in a first preset range; or
at least one AC power supply module configured to convert an input voltage into AC power supply in a second preset range or high-voltage AC power supply in a third preset range.

The at least one DC/AC power supply module comprises a working power supply and at least one standby power supply, the working power supply provides power when it is normal, and the standby power supply provides power when the working power supply is abnormal.

The specific values of the above-mentioned first preset range, second preset range and third preset range may be specifically set depending on specific implementation situations, and the present invention does not make a limitation to this.

As an optional implementation mode, the above-mentioned first preset range is set to 36V∼60V, the above-mentioned second preset range is set to 140V∼290V, and the above-mentioned third preset range is set to 150V∼400V.

The above-mentioned input voltage may be 220V.

The above-mentioned DC power supply module or AC power supply module ensures the normal operation of the above-mentioned dynamic environment monitoring device and the above-mentioned dynamic environment monitoring data acquisition device.

The power supply mode of the above-mentioned dynamic environment monitoring device may be any scheme in which power supply principle and standby power function are consistent with the above-mentioned DC power supply module or AC power supply module, for example, single-power-supply-module power supply, dual-power-supply-module power supply, multi-power-supply-module power supply, and the power supply mode may be DC power supply or AC power supply.

When dual power supply modules or multiple power supply modules are used for power supply, the above-mentioned dual power modules or multiple power modules provide power at the same time or, one working power supply provides power when it is normal, and other standby power supply provide power when the working power supply is abnormal.

The above-mentioned Figure 3 provides a scheme of using two DC power supply modules, wherein a DC power supply module 305-1a is a working power supply, a DC power supply module 305-1b is a standby power supply, the above-mentioned working power supply provides power when it is normal, and the above-mentioned standby power supply provides power when the above-mentioned working power supply is abnormal.

As shown in Figure 4, an embodiment of the present invention provides a schematic diagram of the specific implementation structure of a dynamic environment monitoring device, comprising:
a central processing unit, a non-intelligent interface, an intelligent interface, an expansion interface, a network interface, a PTN transmission module, a 5G transmission module, an IP transmission module, a switch module, an X86 industrial computer mainboard, a memory module, a hard disk module, a data transmission interface, an instruction transmission interface, a working power supply, and a standby power supply.

The above-mentioned central processing unit is connected to the above-mentioned non-intelligent interface through an IO mode; is connected to the above-mentioned intelligent interface through a Universal Asynchronous Receiver (UAR) mode; and is connected to an expansion interface through a USB mode.

The above-mentioned central processing unit is connected to three transmission modules, which are respectively a PTN transmission module, a 5G transmission module, and an IP transmission module.

The above-mentioned central processing unit realizes data interaction with the above-mentioned industrial computer mainboard through a switch module.

The above-mentioned switch module is connected to the above-mentioned network interface by means of RJ45.

The above-mentioned industrial computer mainboard is an X86 industrial computer mainboard, which is connected to the above-mentioned data transmission interface by means of a video graphics array VGA/high-definition multimedia HDMI; and is connected to the above-mentioned instruction transmission interface through a USB mode.

The above-mentioned industrial computer mainboard is connected to a memory module and a hard disk module.

The above-mentioned dynamic environment monitoring device has two power supplies, of which one is a working power supply and one is a standby power supply.

Through the above-mentioned functional modules, the above-mentioned dynamic environment monitoring device may realize dynamic environment monitoring data acquisition, 5G communication, and filtering and local storage of dynamic environment monitoring data.

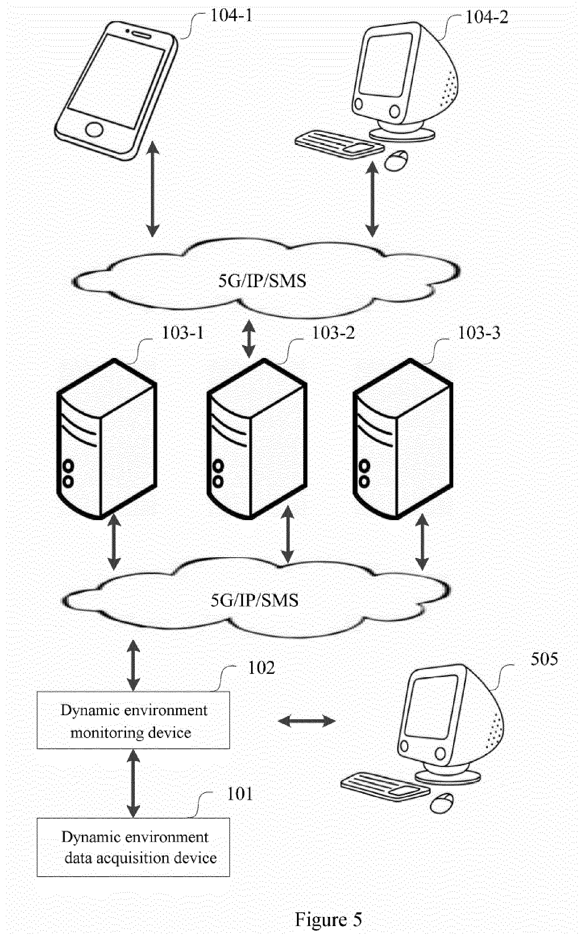

As shown in Figure 5, an embodiment of the present invention provides a schematic diagram of the architecture of a dynamic environment monitoring system.

The dynamic environment monitoring device 102 in the above-mentioned dynamic environment monitoring system actively acquires dynamic environment monitoring data from a monitored object, i.e., the dynamic environment data acquisition device 101, and analyzes and processes the acquired dynamic environment monitoring data, and then reports them to the cloud monitoring center 103 and/or intelligent terminal 104 through a transmission mode such as 5G/IP /Short Message Service (SMS) and the like.

The dynamic environment monitoring device is connected to various dynamic environment data acquisition devices, and is connected to a control device 505.

The above-mentioned cloud monitoring center comprises a data server 103-1, a database 103-2, and an application server 103-3.

The above-mentioned data server is configured to provide any service related to data of each IDC data center where the dynamic environment monitoring device is located, such as data quality management, data calling, data cleaning, and the like.

The above-mentioned application server is configured to perform data interaction with a terminal where a monitoring software platform is installed, and may know running states of various infrastructures across platforms, so as to realize functions such as performance monitoring, intelligent alarming, business process monitoring and the like.

The above-mentioned database is configured to save valid data, so as to realize data sharing.

The above-mentioned intelligent terminal comprises a mobile terminal 104-1, and a web terminal 104-2 with a web service function. Information of each IDC data center where the dynamic environment monitoring device is located may be browsed and managed through the above-mentioned intelligent terminal.

### Embodiment 2

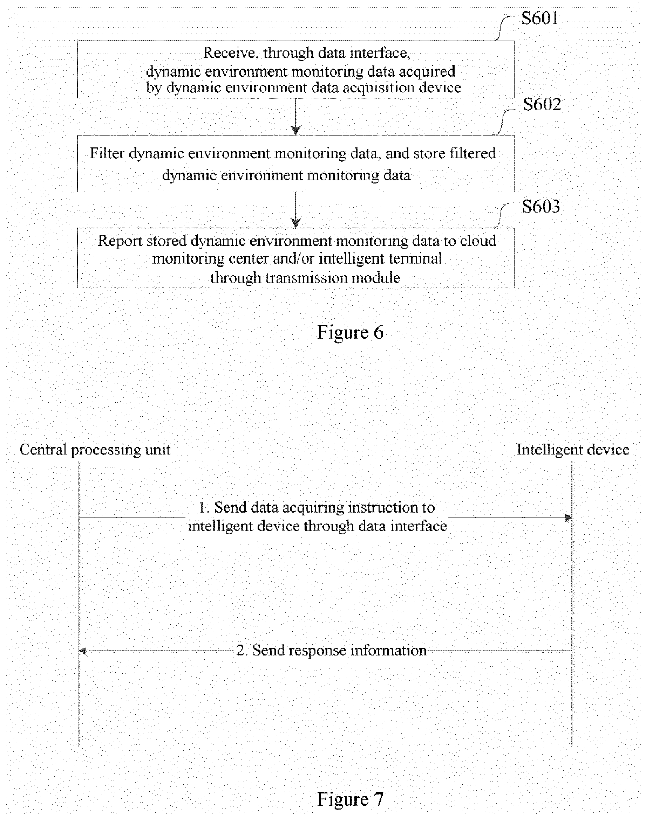

An embodiment of the present invention provides a flowchart of a dynamic environment monitoring method, which is applied to a dynamic environment monitoring device and, as shown in FIG 6, comprises:
Step 601 of receiving, through a data interface, dynamic environment monitoring data acquired by a dynamic environment data acquisition device;
Step 602 of filtering the dynamic environment monitoring data, and storing the filtered dynamic environment monitoring data; and
Step 603 of reporting the stored dynamic environment monitoring data to a cloud monitoring center and/or intelligent terminal through a transmission module.

Optionally, after storing the filtered dynamic environment monitoring data, the method further comprises:
transmitting the stored dynamic environment monitoring data to a management device through a control interface; and
receiving a data management instruction forwarded by the management device through the control interface, and managing the stored dynamic environment monitoring data according to the data management instruction.

Optionally, the receiving, through a data interface, dynamic environment monitoring data acquired by a dynamic environment data acquisition device comprises:
by a central processing unit, receiving non-video type dynamic environment monitoring data through a data interface, and transmitting the non-video type dynamic environment monitoring data to an industrial computer module through a switch module, and
by the switch module, receiving video type dynamic environment monitoring data through a data interface, and transmitting the video type dynamic environment monitoring data to the industrial computer module;
the filtering the dynamic environment monitoring data and storing the filtered dynamic environment monitoring data comprises:
by the industrial computer module, filtering the non-video type and/or video type dynamic environment monitoring data, and storing the filtered dynamic environment monitoring data; and
the reporting the stored dynamic environment monitoring data to a cloud monitoring center and/or intelligent terminal through a transmission module comprises:
by the central processing unit and/or industrial computer module, reporting the stored dynamic environment monitoring data to the cloud monitoring center and/or intelligent terminal through the transmission module.

Optionally, after storing the filtered dynamic environment monitoring data by the industrial computer module, the method further comprises:
by the industrial computer module, transmitting the stored dynamic environment monitoring data to the management device through the control interface; and
by the industrial computer module, receiving a data management instruction forwarded by the management device through the control interface, and managing the stored dynamic environment monitoring data according to the data management instruction.

Optionally, the data interface comprises a non-network interface and a network interface, and the receiving, through a data interface, dynamic environment monitoring data acquired by a dynamic environment data acquisition device comprises:
through a non-network interface, receiving non-video type dynamic environment monitoring data reported by a non-intelligent device;
through the data interface, sending a data acquiring instruction to an intelligent device, and receiving dynamic environment monitoring data passively reported by the intelligent device in response to the data acquiring instruction; and
through the data interface, receiving dynamic environment monitoring data actively reported by a designated intelligent device when a reporting condition is met, and sending confirmation information to the designated intelligent device.

Receiving the dynamic environment monitoring data acquired by the intelligent device includes two specific implementation modes, i.e., an active reporting and a passive query.

### Implementation mode 1: Passive query

Optionally, the receiving, through a data interface, dynamic environment monitoring data acquired by a dynamic environment data acquisition device comprises:
by a central processing unit, sending a data acquiring instruction to an intelligent device through the non-network interface/network interface, and receiving non-video type/video type dynamic environment monitoring data passively reported by the intelligent device through the non-network interface/network interface.

As shown in Figure 7, an embodiment of the present invention provides a signaling flowchart for a passive query:
1. the central processing unit sends the data acquiring instruction to the intelligent device through the data interface; and
2. the intelligent device sends response information to the central processing unit.

The above-mentioned response information includes non-video type dynamic environment monitoring data reported through a non-network interface or video type dynamic environment monitoring data reported through a network interface by the intelligent device in response to the data acquiring instruction.

It should be noted that, when the above-mentioned intelligent device does not enter a sleep state, it may receive instructions from the above-mentioned central processing unit and feeds back response information.

When the above-mentioned dynamic environment monitoring device is running, the central processing unit sends the above-mentioned data acquiring instruction to a corresponding EndDevice device through address access. The target device that receives the instruction makes a response, and sends the data to the central processing unit for processing.

It should be noted that, an analog quantity acquisition device and a remote control device only support the above-mentioned working mode of passive query.

Dynamic environment monitoring data actively reported by a first intelligent device and/or second intelligent device when a reporting condition is met is received, and confirmation information is sent to the first intelligent device and/or second intelligent device, the first intelligent device being a non-analog quantity acquisition device and a non-remote control device connected to a non-network interface to acquire non-video type dynamic environment monitoring data, the second intelligent device being an intelligent device connected to a network interface to acquire video type dynamic environment monitoring data.

### Implementation mode 2: Active reporting

Non-video type/video type dynamic environment monitoring data actively reported by a designated intelligent device when a reporting condition is met is received by a central processing unit through the non-network interface/network interface, and confirmation information is sent to the designated intelligent device.

It should be noted that, the above-mentioned designated intelligent device includes a first intelligent device and a second intelligent device.

The above-mentioned first intelligent device is a non-analog quantity acquisition device and a non-remote control device connected to a non-network interface to acquire non-video type dynamic environment monitoring data.

The above-mentioned second intelligent device is an intelligent device connected to a network interface to acquire video type dynamic environment monitoring data.

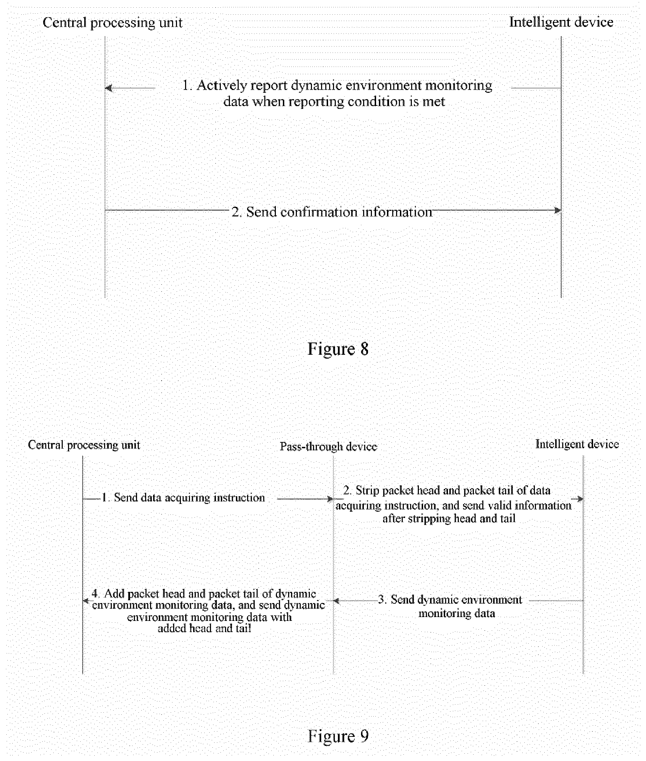

As shown in Figure 8, an embodiment of the present invention provides a signaling flowchart of an active reporting:
1. the intelligent device actively reports dynamic environment monitoring data to the central processing unit when a reporting condition is met; and
2. the central processing unit sends confirmation information to the above-mentioned intelligent device.

The above-mentioned intelligent device is usually in a sleep state. When there is externally a state change, hibernation is terminated, new dynamic environment monitoring data is sent to the central processing unit, and the central processing unit then feeds back confirmation information to a target intelligent device.

As an optional implementation mode, the above-mentioned target intelligent device sends dynamic environment monitoring data cyclically every preset time before receiving the confirmation information from the central processing unit, and stops the sending until the confirmation information is received.

The above-mentioned preset time may be specifically set depending on specific implementation situations, for example, the above-mentioned preset time is set to 10 seconds.

The above-mentioned dynamic environment monitoring device, the above-mentioned intelligent device and the above-mentioned non-intelligent device form a signal acquisition network with a master-slave structure, the above-mentioned dynamic environment monitoring device is a master device, and the above-mentioned intelligent device and the above-mentioned non-intelligent device are slave devices.

The device type of the above-mentioned dynamic environment monitoring device is a central processing unit, which is configured to manage the above-mentioned signal acquisition network, including acquisition of non-intelligent signals sent by the above-mentioned non-intelligent device, and setting of intelligent signals for data interaction with the above-mentioned intelligent device.

The above-mentioned dynamic environment monitoring device is connected to the cloud monitoring center and/or intelligent terminal through a 5G/PTN/IP transmission mode. Upon completion of networking, the cloud monitoring center and/or intelligent terminal accesses the central processing unit of the above-mentioned dynamic environment monitoring device through a 5G/PTN/IP transmission mode, to monitor the above-mentioned signal acquisition network.

The device types of the above-mentioned intelligent device and the above-mentioned non-intelligent device are terminals EndDevice.

The above-mentioned dynamic environment monitoring device may provide a power supply for a device whose device type is EndDevice.

The above-mentioned power supply may be in any form suitable for the above-mentioned EndDevice device, which is not limited in the embodiment of the present invention, for example, a 5V-24V power supply.

As an optional implementation mode, the above-mentioned dynamic environment monitoring device provides, for a measurement node such as smoke sensing, door magnetism, water immersion, vibration, temperature and humidity and the like in the above-mentioned intelligent device, a power supply that meets power supply requirements of the above-mentioned measurement node, to ensure the above-mentioned measurement node to implement the function of active reporting or passively query when the external state changes, for example, provides a 12V power supply.

A device such as an air-conditioning device, a UPS power supply device, a video image monitoring device and the like in the above-mentioned intelligent device may perform two-way communication with the above-mentioned dynamic environment monitoring device through a serial port interface or a network interface, to transmit useful information to the above-mentioned dynamic environment monitoring device.

The above-mentioned temperature and humidity measurement node has a function of setting temperature and humidity alarm thresholds.

Under normal circumstances, at intervals of a preset reporting time, such as one hour, measured temperature and humidity values are reported once; when temperature and humidity changes exceed the set thresholds, the acquired dynamic environment monitoring data is reported immediately.

Optionally, the receiving, through a data interface, dynamic environment monitoring data acquired by a dynamic environment data acquisition device further comprises:
by a central processing unit, sending a data acquiring instruction to a pass-through device through the non-network interface/wireless communication mode, and receiving dynamic environment monitoring data passively reported by the intelligent device that is forwarded by an interface of the pass-through device; and
by a central processing unit, receiving, through the non-network interface/wireless communication mode, dynamic environment monitoring data actively reported by a designated intelligent device when a reporting condition is met that is forwarded by the pass-through device, and sending confirmation information to the designated intelligent device through the pass-through device.

It should be noted that, the above-mentioned designated intelligent device includes a first intelligent device and a second intelligent device.

The above-mentioned first intelligent device is a non-analog quantity acquisition device and a non-remote control device connected to a non-network interface to acquire non-video type dynamic environment monitoring data.

The above-mentioned second intelligent device is an intelligent device connected to a network interface to acquire video type dynamic environment monitoring data.

As an optional implementation mode, the following are further comprised:
decrypting, through the pass-through device, encrypted data acquiring instruction/confirmation information sent by the central processing unit through a wireless communication mode; and
encrypting, through the pass-through device, dynamic environment monitoring data passively reported by the intelligent device/actively reported by the designated intelligent device.

It should be noted that, in communicating with the above-mentioned central processing unit through a wireless communication mode, the above-mentioned pass-through device has an encryption/decryption function.

Any mode capable of realizing wireless communication between the above-mentioned pass-through device and the above-mentioned central processing unit may be applied to the embodiment of the present invention. For example, the above-mentioned wireless communication mode may be a wireless communication mode such as Narrow Band Internet of Things (NB-IOT) or Zigbee or WIFI, and the embodiment of the present invention does not make any limitation to this.

It should be noted that, the device type of the above-mentioned pass-through device may be any type conforming to a data processing mode, for example, a terminal EndDevice or a router Router.

As an optional implementation mode, the device type of the pass-through device in the above-mentioned intelligent device is a router Router, and its working mode is a slave device, which supports the functions of active reporting and passive query.

### Implementation mode 1: Passive query through pass-through device

An encrypted data acquiring instruction is sent by a central processing unit to a pass-through device through a wireless communication mode, the above-mentioned encrypted data acquiring instruction is decrypted through the above-mentioned pass-through device, and the decrypted data acquiring instruction is sent to the above-mentioned intelligent device.

The dynamic environment monitoring data sent by the above-mentioned intelligent device is encrypted through the above-mentioned pass-through device, and the encrypted dynamic environment monitoring data forwarded by the above-mentioned pass-through device is received.

As shown in Figure 9, an embodiment of the present invention provides a signaling flowchart of a passive query of a pass-through device:
1. the central processing unit sends the data acquiring instruction to the pass-through device;
2. the above-mentioned pass-through device performs stripping of a packet head and a packet tail for the data acquiring instruction, and sends valid information after stripping head and tail to the intelligent device;
3. the intelligent device sends dynamic environment monitoring data to the above-mentioned pass-through device; and
4. the above-mentioned pass-through device performs addition of the packet head and the packet tail for the above-mentioned dynamic environment monitoring data, and sends the dynamic environment monitoring data with added head and tail to the central processing unit.

It should be noted that, the above-mentioned stripping of the packet head and the packet tail is a decryption operation, and the above-mentioned addition of the packet head and the packet tail is an encryption operation.

### Implementation mode 2: Active reporting through pass-through device

The dynamic environment monitoring data actively reported by the above-mentioned designated intelligent device when a reporting condition is met is encrypted through a pass-through device, and the encrypted dynamic environment monitoring data forwarded by the above-mentioned pass-through device is received by the central processing unit through a wireless communication mode.

Encrypted confirmation information is sent to the above-mentioned pass-through device, the above-mentioned encrypted confirmation information is decrypted through the above-mentioned pass-through device, and the decrypted confirmation information is sent to the above-mentioned designated intelligent device.

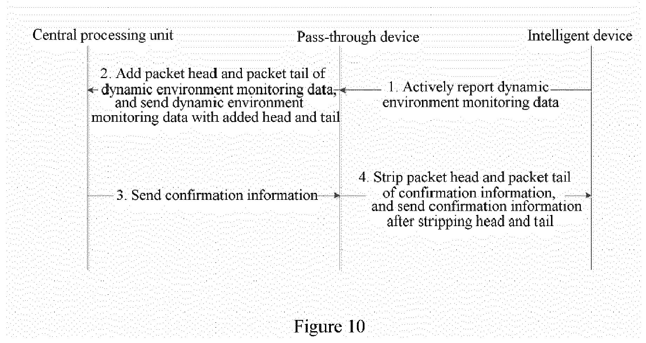

As shown in Figure 10, an embodiment of the present invention provides a signaling flowchart of an active reporting of a pass-through device:
1. the intelligent device actively reports dynamic environment monitoring data to the pass-through device when a reporting condition is met;
2. the above-mentioned pass-through device performs addition of a packet head and a packet tail for the above-mentioned dynamic environment monitoring data, and sends the dynamic environment monitoring data with added head and tail to the central processing unit;
3. the central processing unit sends confirmation information to the pass-through device; and
4. the above-mentioned pass-through device performs stripping of a packet head and a packet tail for the confirmation information, and sends confirmation information after stripping head and tail to the intelligent device.

As an optional implementation mode, the above-mentioned pass-through device provides an RS232/RS485/RS422 intelligent interface to realize data interaction between the above-mentioned pass-through device and the above-mentioned intelligent device/designated intelligent device.

When performing wireless communication with the above-mentioned central processing unit, the above-mentioned pass-through device performs stripping of a packet head and a packet tail for data sent from the central processing unit, sends valid data to the intelligent device connected to the above-mentioned intelligent interface; and after performing encapsulation of a packet head and a packet tail for the reported data of the intelligent device, sending these data from the intelligent interface to the central processing unit.

In the several embodiments provided in this application, it should be understood that the disclosed system, device, and method may be implemented in other modes. For example, the device embodiments described above are only schematic. For example, the division of the modules is only a logical function division, and there may be other division modes in actual implementation, for example, multiple modules or components may be combined or may be integrated into another system, or some features may be ignored or not implemented. In addition, the showed or discussed mutual coupling or direct coupling or communication connection may be indirect coupling or communication connection through some interfaces, devices or modules, and may be in electrical, mechanical or other forms.

The modules described as separate components may be or may not be physically separated, and the components shown as modules may be or may not be physical modules, that is, may be located at one place, or may also be distributed to a plurality of network modules. Some or all of the modules may be selected according to actual needs so as to achieve the objects of the solutions of the present embodiments.

In addition, the respective functional modules in the various embodiments of the present application may be integrated into one processing module, it is also possible that the respective modules physically exist alone, and it is also possible that two or more modules are integrated into one module. The above-mentioned integrated modules may be implemented in the form of hardware, and may also be implemented in the form of software functional modules. If the integrated modules are implemented in the form of software function modules and sold or used as independent products, they may be stored in a computer readable storage medium.

In the above-mentioned embodiments, it is possible to implement in whole or in part by software, hardware, firmware, or any combination thereof. In case of implementation by software, it is possible to implement in whole or in part in the form of a computer program product.

The computer program product comprises one or more computer instructions. When the computer program instructions are loaded and executed on a computer, the processes or functions described according to the embodiments of the present application are generated in whole or in part. The computer may be a general-purpose computer, a special-purpose computer, a computer network, or other programmable devices. The computer instructions may be stored in a computer-readable storage medium or transmitted from one computer readable storage medium to another computer readable storage medium. For example, the computer instructions may be transmitted from one website, computer, server, or data center to another website, computer, server or data center in a wired (such as coaxial cable, optical fiber, digital subscriber line (DSL)) or wireless (such as infrared, radio, microwave, and the like) manner. The computer readable storage medium may be any available medium that may be stored by a computer, or a data storage device such as a server or a data center and the like incorporating integration of one or more available media. The available medium may be a magnetic medium (for example, a floppy disk, a hard disk, a magnetic tape), an optical medium (for example, a DVD), or a semiconductor medium (for example, a solid state disk (SSD)), etc.

The technical solutions provided by this application have been introduced above in detail. In this application, specific examples are used to explain the principles and implementation modes of this application. The description of the above embodiments is only used to help understand the method and core idea of this application; meanwhile, for those ordinarily skilled in the art, based on the idea of this application, there will be changes in both specific implementation modes and application scope. In summary, the contents of this specification should not be construed as limiting this application.

Those skilled in the art should understand that, the embodiments of this application may be provided as a method, a system, or a computer program product. Therefore, this application may adopt the form of a complete hardware embodiment, a complete software embodiment, or an embodiment combining software and hardware aspects. Moreover, this application may adopt the form of a computer program product implemented on one or more computer usable storage media (including, but not limited to, a disk storage, a CD-ROM, an optical storage, etc.) comprising computer usable program codes therein.

This application is described with reference to flowcharts and/or block diagrams of the method, device (system), and computer program product according to this application. It should be understood that, each process and/or block in the flowcharts and/or block diagrams, as well as a combination of processes and/or blocks in the flowcharts and/or block diagrams may be realized by computer program instructions. These computer program instructions may be provided to a processor of a general-purpose computer, a special-purpose computer, an embedded processor, or other programmable data processing devices to generate a machine, so as to generate, by instructions executed by the processor of the computer or other programmable data processing devices, a device(s) for realizing a function(s) specified in one process or multiple processes in the flowcharts and/or one block or multiple blocks in the block diagrams.

These computer program instructions may also be stored in a computer readable memory capable of guiding a computer or other programmable data processing devices to work in a specific manner, so that instructions stored in the computer readable memory generate a manufactured article including an instruction device. The instruction device realizes the function(s) specified in one process or multiple processes in the flowcharts and/or one block or multiple blocks in the block diagrams.

These computer program instructions may also be loaded on a computer or other programmable data processing devices, so that a series of operation steps are performed on the computer or other programmable device to produce computer-implemented processing, such that instructions executed on the computer or other programmable devices provide step(s) for realizing the function(s) specified in one process or multiple processes in the flowcharts and/or one block or multiple blocks in the block diagrams.

Obviously, those skilled in the art may carry out various changes and variants to this application without departing from the spirit and scope of this application. In this way, if these modifications and variants to this application fall within the scope of the claims of this application and their equivalent technologies, this application is also intended to include these modifications and variants.

## Claims

1. A dynamic environment monitoring device, **characterized by** comprising:
a data interface connected to a processing module and a dynamic environment data acquisition device, and configured to transmit dynamic environment monitoring data acquired by the dynamic environment data acquisition device to the processing module;
the processing module respectively connected to the data interface and a transmission module, and configured to acquire the dynamic environment monitoring data transmitted by the data interface, filter the dynamic environment monitoring data and store the filtered dynamic environment monitoring data, and transmit the stored dynamic environment monitoring data to the transmission module; and
the transmission module connected to the processing module and a cloud monitoring center and/or intelligent terminal, and configured to report the dynamic environment monitoring data transmitted by the processing module to the cloud monitoring center and/or intelligent terminal.

2. The dynamic environment monitoring device according to claim 1, **characterized by** further comprising:
a control interface connected between a management device and the processing module,
wherein the processing module is further configured to:
transmit the stored dynamic environment monitoring data to the management device through the control interface, and receive a data management instruction forwarded by the management device through the control interface and manage the stored dynamic environment monitoring data according to the data management instruction.

3. The dynamic environment monitoring device according to claim 1 or 2, **characterized in that** the processing module comprises:
a central processing unit respectively connected to the data interface and a switch module, and configured to acquire non-video type dynamic environment monitoring data transmitted by the data interface, and transmit the non-video type dynamic environment monitoring data to an industrial computer module through the switch module;
the switch module respectively connected to the central processing unit, the data interface and the industrial computer module, and configured to realize data transmission between the central processing unit and the industrial computer module, and acquire video type dynamic environment monitoring data transmitted by the data interface and transmit the video type dynamic environment monitoring data to the industrial computer module; and
the industrial computer module configured to filter the non-video type and/or video type dynamic environment monitoring data and store the filtered dynamic environment monitoring data,
wherein the central processing unit and/or industrial computer module is connected to the transmission module, and is further configured to transmit the dynamic environment monitoring data stored in the industrial computer module to the transmission module.

4. The dynamic environment monitoring device according to claim 3, **characterized in that** the industrial computer module is further configured to:
transmit the stored dynamic environment monitoring data to the management device through the control interface, and receive a data management instruction forwarded by the management device through the control interface and manage the stored dynamic environment monitoring data according to the data management instruction; and
the industrial computer module comprises:
an industrial computer mainboard configured to: filter the non-video type and/or video type dynamic environment monitoring data through a memory, store the filtered dynamic environment monitoring data into a hard disk module, transmit the dynamic environment monitoring data stored in the hard disk module to the central processing unit and/or transmission module; transmit the stored dynamic environment monitoring data to the management device through the control interface, and receive the data management instruction forwarded by the management device through the control interface and manage the stored dynamic environment monitoring data according to the data management instruction,
a memory module configured to filter the non-video type and/or video type dynamic environment monitoring data under the control of the industrial computer mainboard, and
the hard disk module configured to store the filtered dynamic environment monitoring data.

5. The dynamic environment monitoring device according to claim 1, **characterized in that** the transmission module comprises at least one of:
a 5G transmission module configured to report, through 5G transmission, the dynamic environment monitoring data transmitted by the processing module to the cloud monitoring center and/or intelligent terminal,
a Packet Transport Network (PTN) transmission module configured to report, through PTN transmission, the dynamic environment monitoring data transmitted by the processing module to the cloud monitoring center and/or intelligent terminal, and
an Internet Protocol (IP) transmission module configured to report, through IP transmission, the dynamic environment monitoring data transmitted by the processing module to the cloud monitoring center and/or intelligent terminal; or
the transmission module is further configured to acquire the dynamic environment monitoring data acquired by the dynamic environment data acquisition device through a wireless communication mode of Narrow Band Internet of Things (NB-IOT) or Zigbee or WIFI, and report the acquired dynamic environment monitoring data to the cloud monitoring center and/or intelligent terminal.

6. The dynamic environment monitoring device according to claim 1, **characterized in that** the data interface comprises:
a non-network interface connected between a first dynamic environment data acquisition device and the processing module, and configured to transmit non-video type dynamic environment monitoring data acquired by the first dynamic environment data acquisition device to the processing module, and
a network interface connected between a second dynamic environment data acquisition device and the processing module, and configured to transmit video type dynamic environment monitoring data acquired by the second dynamic environment data acquisition device to the processing module; and
the first dynamic environment data acquisition device comprises an intelligent device and a non-intelligent device, and the non-network interface comprises:
an electrical signal acquisition interface connected to the non-intelligent device, comprising an analog signal acquisition interface and a switch signal acquisition interface,
a serial port acquisition interface connected to the intelligent device, and
an expansion interface connected to an expansion slot which uses a Universal Serial Bus (USB) communication protocol.

7. The dynamic environment monitoring device according to claim 1, **characterized by** further comprising:
at least one DC power supply module configured to convert an input voltage into DC power supply in a first preset range, or
at least one AC power supply module configured to convert an input voltage into AC power supply in a second preset range or high-voltage AC power supply in a third preset range,
wherein the at least one DC/AC power supply module comprises a working power supply and at least one standby power supply, the working power supply provides power when it is normal, and the standby power supply provides power when the working power supply is abnormal; or
the processing module is further configured to acquire, through the data interface/wireless communication mode, the dynamic environment monitoring data acquired by the dynamic environment data acquisition device connected to a pass-through device that is forwarded by the pass-through device.

8. A dynamic environment monitoring system, **characterized by** comprising:
a dynamic environment data acquisition device configured to acquire dynamic environment monitoring data, and transmit the dynamic environment monitoring data to a dynamic environment monitoring device;
the dynamic environment monitoring device according to any one of claims 1 to 7; and
a cloud monitoring center and/or intelligent terminal configured to: receive the dynamic environment monitoring data reported by the dynamic environment monitoring device, and perform dynamic environment monitoring based on the reported dynamic environment monitoring data.

9. A dynamic environment monitoring method applied to a dynamic environment monitoring device, **characterized by** comprising:
receiving, through a data interface, dynamic environment monitoring data acquired by a dynamic environment data acquisition device;
filtering the dynamic environment monitoring data and storing the filtered dynamic environment monitoring data; and
reporting the stored dynamic environment monitoring data to a cloud monitoring center and/or intelligent terminal through a transmission module.

10. The method according to claim 9, **characterized by** further comprising, after storing the filtered dynamic environment monitoring data:
transmitting the stored dynamic environment monitoring data to a management device through a control interface; and
receiving a data management instruction forwarded by the management device through the control interface, and managing the stored dynamic environment monitoring data according to the data management instruction.

11. The method according to claim 9 or 10, **characterized in that** the receiving, through a data interface, dynamic environment monitoring data acquired by a dynamic environment data acquisition device comprises:
by a central processing unit, receiving non-video type dynamic environment monitoring data through the data interface, and transmitting the non-video type dynamic environment monitoring data to an industrial computer module through a switch module, and
by the switch module, receiving video type dynamic environment monitoring data through the data interface, and transmitting the video type dynamic environment monitoring data to the industrial computer module;
the filtering the dynamic environment monitoring data and storing the filtered dynamic environment monitoring data comprises:
by the industrial computer module, filtering the non-video type and/or video type dynamic environment monitoring data, and storing the filtered dynamic environment monitoring data; and
the reporting the stored dynamic environment monitoring data to a cloud monitoring center and/or intelligent terminal through a transmission module comprises:
by the central processing unit and/or industrial computer module, reporting the stored dynamic environment monitoring data to the cloud monitoring center and/or intelligent terminal through the transmission module.

12. The method according to claim 11, **characterized by** further comprising, after storing the filtered dynamic environment monitoring data by the industrial computer module:
by the industrial computer module, transmitting the stored dynamic environment monitoring data to the management device through the control interface; and
by the industrial computer module, receiving the data management instruction forwarded by the management device through the control interface, and managing the stored dynamic environment monitoring data according to the data management instruction.

13. The method according to claim 9, **characterized in that** the data interface comprises a non-network interface and a network interface, and the receiving, through a data interface, dynamic environment monitoring data acquired by a dynamic environment data acquisition device comprises:
through the non-network interface, receiving non-video type dynamic environment monitoring data reported by a non-intelligent device,
through the data interface, sending a data acquiring instruction to an intelligent device, and receiving the dynamic environment monitoring data passively reported by the intelligent device in response to the data acquiring instruction, and
through the data interface, receiving the dynamic environment monitoring data actively reported by a designated intelligent device when a reporting condition is met, and sending confirmation information to the designated intelligent device.

14. The method according to claim 13, **characterized in that** the receiving, through a data interface, dynamic environment monitoring data acquired by a dynamic environment data acquisition device comprises:
by a central processing unit, sending the data acquiring instruction to the intelligent device through the non-network interface/network interface, and receiving non-video type/video type dynamic environment monitoring data passively reported by the intelligent device through the non-network interface/network interface; and
by the central processing unit, receiving, through the non-network interface/network interface, the non-video type/video type dynamic environment monitoring data actively reported by the designated intelligent device when the reporting condition is met, and sending the confirmation information to the designated intelligent device.

15. The method according to claim 13, **characterized in that** the receiving, through a data interface, dynamic environment monitoring data acquired by a dynamic environment data acquisition device further comprises:
by a central processing unit, sending the data acquiring instruction to a pass-through device through the non-network interface/wireless communication mode, and receiving the dynamic environment monitoring data passively reported by the intelligent device that is forwarded by an interface of the pass-through device, and
by the central processing unit, receiving, through the non-network interface/wireless communication mode, the dynamic environment monitoring data actively reported by the designated intelligent device when the reporting condition is met that is forwarded by the pass-through device, and sending the confirmation information to the designated intelligent device through the pass-through device; and
the method further comprises:
decrypting, through the pass-through device, encrypted data acquiring instruction/confirmation information sent by the central processing unit through the wireless communication mode, and
encrypting, through the pass-through device, the dynamic environment monitoring data passively reported by the intelligent device/actively reported by the designated intelligent device.
